# EUROPEAN PATENT SPECIFICATION

(11) **EP 2 847 545 B1**
(45) Date of publication and mention of the grant of the patent: **25.05.2016**
(21) Application number: 13725554.3
(22) Date of filing: 07.05.2013
(51) Int. Cl.: G01B 21/16, E02D 33/00, G01B 21/32

(54) **MONITORING SYSTEM AND METHOD**
ÜBERWACHUNGSSYSTEM UND -VERFAHREN
SYSTÈME ET PROCÉDÉ DE SURVEILLANCE

(30) Priority: 11.05.2012 DK 201200330
(43) Date of publication of application: 18.03.2015
(73) Proprietor: Scada International ApS, 7490 Aulum (DK)
(72) Inventor: BAGGER, Thomas Vanting, DK-7490 Aulum (DK)
(74) Representative: Hoffgaard Rasmussen, Martin
(86) International application number: PCT/DK2013/000033
(87) International publication number: WO 2013/167128

(56) References cited:
- WO-A1-03/031733
- WO-A1-2012/016563
- JP-A- H0 599 648

## Description

### Field of the Invention

The invention relates to a monitoring system and method for monitoring displacement between a foundation member and a base member attached to the foundation member. The monitoring system may be used to monitor the foundation of various constructions e.g. a foundation of a wind turbine towers.

### Background of the Invention

Many engineering constructions comprise a foundation member connecting a tower structure to the ground. One example of such construction is a wind turbine. A typical wind turbine comprises an elongate tower attached to a foundation that is intended for transferring vertical loads as well as horizontal dynamic loads of the wind turbine to the ground. In order to prevent angular deflection of the foundations, a robust design of the foundations is required.

In operation, the load of the foundation can reach a critical level due to the additional load caused by the horizontal dynamic loads of the wind turbine during operation of the wind turbine. It is a significant problem if the load of the foundation is so large that the displacement between a foundation member and a base member attached to the foundation member exceeds a critical displacement limit.

Therefore, there is need for a system and a method that can be used to monitor the displacement between a foundation member and a base member attached to the foundation member. An example of such a system is disclosed in WO 2012/016563.

### Object of the Invention

Accordingly, it is an object of the present invention to provide a system and a method that can be used to monitor the displacement between a foundation member and a base member attached to the foundation member.

It is also an object of the present invention to provide a system and a method that can be used to generate an alert when the displacement between a foundation member and a base member attached to the foundation member exceeds a predefined critica level.

### Summary of the Invention

The object of the present invention can be achieved by a monitoring system having the features defined in claim 1 and by a method as defined in claim 6 and by the use as defined in claim 10. Preferred embodiments are defined in the dependent sub claims and explained in the following description and illustrated in the accompanying drawings.

The monitoring system according to the invention is configured to monitor a vertical displacement between a foundation member and a base member attached to the foundation member and the monitoring system comprises:
- three sensors adapted to measure displacement between the foundation member and the base member, configured to measure said vertical displacement between the foundation member and the base member of a tower, wherein each of the three sensors are arranged on a vertically extending rod fixed to the foundation member
- a control unit configured to receive displacement data from the sensors and to send the received displacement data to an external unit.

The monitoring system is a useful tool to monitor the vertical displacement between a foundation member and a base member attached to the foundation member. Other data than displacement between a foundation member and a base member may be detected and sent to control unit and hereafter forwarded to an external unit. Such additional data may be other measured data (e.g. temperature data, humidity or vibration data) or data derived from any of the measured data.

The three sensors are preferably evenly distributed around the base member of a tower.

The use of three sensors evenly distributed around the base member of a tower makes it possible to detect vertical displacement independent of the wind direction.

Hence, it is preferred that the sensors (three or more) are arranges in a horizontal plane and that at least three of these are mutually spaced by an angle of approximately 120°.

In one embodiment the monitoring system comprises three and only three sensors.

The external unit may be configured to generate an alert when the displacement between a foundation member and a base member attached to the foundation member exceeds a predefined critical level.

The external unit may be a computer, a server, a mobile phone or any other suitable electrical device capable of receiving data from the control unit.

The displacement is preferably linear displacement and may be measured by any suitable means.

The foundation member may be any type of foundation e.g. a concrete foundation for a wind turbine or for another construction. The base member may be any base member attached to the foundation member and connecting the foundation member to a construction (e.g. a tower construction) attached to the base member.

Each of the three sensors may be any type of sensors capable of measuring displacement between the foundation member and the base member. These sensors may be adapted to measure linear displacement between the foundation member and the base member or to detect the position of the foundation member and the base member. The sensors may be motion detectors.

The linear displacement may be measured by linear position sensors, linear displacement sensors which are also called linear displacement transducers. The displacement may be measured by using position sensors capable of detecting the absolute position.

The displacement may be measured by using piezo-electric transducers, inductive non-contact position sensors, linear variable differential transformer sensors, capacitive transducers, string potentiometers, Hall-effect sensors, laser sensors or eddy current sensors by way of example.

The control unit may be any suitable type of control unit capable of receiving displacement data from the sensors and to send the received displacement data to an external unit. The control unit may be connected to the sensors and/or to the external unit wirelessly or by means of wires.

According to the invention the monitoring system comprises means for sending a stop command to a wind turbine when a predefined displacement between the foundation member and the base member is exceeded.
Hereby, the monitoring system is capable preventing damage of a wind turbine in extreme windy weather.
It is preferred that the control unit comprises storage means configured to store received displacement data and that the control unit is configured to generate an alert when a predefined alert criterion is meet.
The alert may be a visual or acoustic alert and the storage means may be any suitable type of data storage means.

A predefined alert criterion may be a default alert criterion according to the default setting, however, it is also possible to change the alert criterion e.g. at the control device (by using an interface or remotely from the Internet, via an SMS or by other suitable means).

A predefined default alert criterion may be a maximum displacement between the foundation member and the base member.

It is preferred that the predefined alert criterion is a predefined maximal allowable displacement. The predefined maximal allowable displacement may be defined in one or more directions.

It may be an advantage that a message is sent to a receiver through a network.

The message may be an email, a SMS or another text message. The receiver may be a computer or telephone or another electronic device. The network may be a virtual private network (VPN) that uses public telecommunication infrastructure like the Internet, local internet network, mobile network or another suitable network.

The monitoring system comprises three sensors configured to measure vertical displacement between the foundation member and the base member of a tower. However, it may be preferred that the monitoring system in addition to these three sensors comprises additionally one, two or preferably three, or evern more additional sensors configured to measure vertical displacement between the foundation member and the base member of a tower.

According to the invention each of the sensors are arranged on a vertically extending rod fixed to the foundation member.

It may be an advantage that the control unit is configured to be reached remotely through an Internet Protocol connection (IP-connection). This may be achieved via VPN-tunnelling or direct from an internal network.

It is preferred that the monitoring system is configured in such a way that monitoring data are accessible from an Internet page and that the monitoring data can be accessed by typing the IP-address of the monitoring system in an internet browser.

According to the invention the vertical displacement between a foundation member and a base member is detected. Sensors may be arranged in order to additionally allow detection of displacement in other directions in addition to the vertical displacement detection.

It is preferred that the displacement monitoring is carried out by using three or more sensors and that displacement data from the sensors are forwarded to an external unit. The number of sensors may be chosen according to specific requirements such as accuracy requirements (data from more sensors makes it possible to provide more accurate data e.g. by averaging data from several sensors and hereby reducing the influence from inaccurate data received from inaccurate sensors), safety requirements (a system that receives data from several sensors is less sensitive if one sensor is damaged or out of order).

It is an advantage that displacement data is sent to a control unit and that the control unit forwards the displacement data to an external access point. The control unit may forward the displacement data to an external access point via wires, wirelessly and/or via internet or another network e.g. via a mobile network. Hereby the displacement data may be distributed to a group of receivers or be analysed or stored for further analysis.

According to the invention an alert is sent to a computer or a mobile phone when the displacement exceeds a predefined level. Hereby important information can be provided to relevant persons so that an action can be taken immediately or very soon after the displacement has exceeds a predefined level.

The predefined level may be a default setting, a quantity that is varied as function of time according to a set of rules (the maximal acceptable displacement level may depend on a number of external parameters such as wind speed, temperature and other weather conditions, by way of example)

It may be an advantage that the alert is based on calculations based on measured, received and/or derived data. The calculations may include data filtration or any other type of data processing.

It is preferred that an alert, in the form of an email, a SMS or another text message or data message is sent to a computer or a mobile phone when the displacement exceeds a predefined level.

It is preferred that the displacement data that is received by the control unit from the sensors (8) and to send to an external unit include measured maximum values and/or measured minimum values and/or calculated average values. It is preferred that these values are determined and/or calculated every predefined period (e.g. every second minute, every tenth minute or every hour).

It may be beneficial that the control unit is configured to provide (calculate, display) one or more parameter as function of time. Preferably, the vertical displacement between a foundation member and a base member attached to the foundation member. By way example, the at least one parameter as function of time may be displayed graphically as a graph or in a data sheet table.

It may be an advantage that data received by the control unit or by an external device is stored locally or externally.

It is preferred that the monitoring system is configured to generate and send an email report including one or more maximal displacement values and one or more additional information. Such additional information may include the name of a wind mill park and the identification number of the actual wind turbine. It may be an advantage that the email report is sent after a predefined period (e.g. twice every day) or when a predefined level is reached.

It may be an advantage that displacement between a foundation member and a base member attached to the foundation member is measured continuously or on a regular basis such as once every second, once every minute or once every quarter of an hour. The measurements may be carried out by using one or several sensors.

It may be an advantage to provide a wind turbine comprising a monitoring system according to one of the claims 1 - 5. Such a wind turbine will be closely monitored for displacement between the foundation member and the base member attached to the foundation member. Hereby a safe and more reliable wind turbine can be provided.

It is an advantage that the monitoring system is configured to give access actual live measurements and that these measurements are accessible via the Internet or a network or via another type of data information accession.

It may be an advantage that the control unit is a programmable logic controller (PLC) configured to calculate a maximum and minimum value for one or more displacement parameter (preferably the vertical displacement) for every 10 minutes interval and the PLC is configured to store these data locally or externally for remote data retrieval.

It may be beneficial that after data retrieval, the local data buffer in the PLC is cleared automatically.

It may be an advantage that data is stored and saved in "Excel format" or another suitable format for further reporting.

### Description of the Drawing

The invention will become more fully understood from the detailed description given herein below. The accompanying drawings are given by way of illustration only, and thus, they are not limitative of the present invention. In the accompanying drawings:
- Fig. 1: shows a schematic close-up view of a monitoring system according to the invention;
- Fig. 2: shows another view of the monitoring system shown in Fig. 1;
- Fig. 3: shows another monitoring system according to the invention;
- Fig. 4: shows another embodiment of a monitoring system according to the invention;
- Fig. 5: shows an example of a text message generated and sent by a monitoring system according to the invention.
- Fig. 6: shows another monitoring system according to the invention;
- Fig. 7: shows a cross-sectional view of a wind turbine tower attached to a foundation member and
- Fig. 8: shows a cross-sectional top view of two monitoring system according to the invention.

### Detailed Description of the Invention

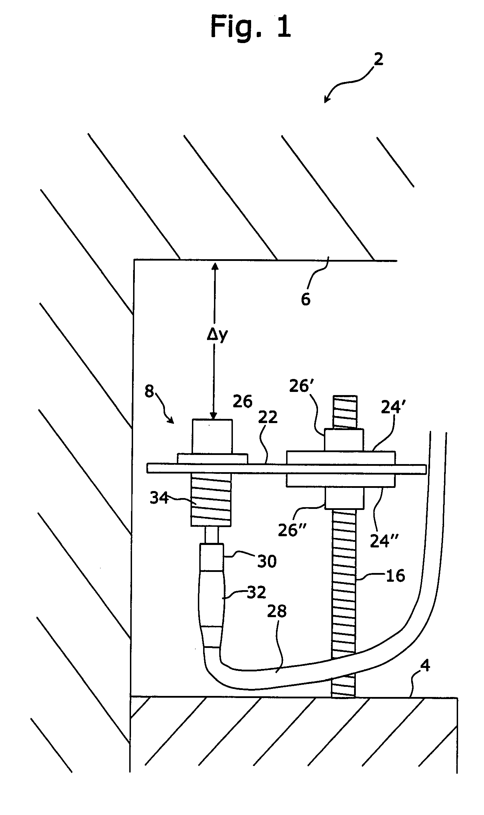

Referring now in detail to the drawings for the purpose of illustrating preferred embodiments of the present invention, a schematic close-up view of a part of a monitoring system 2 according to the invention is illustrated in Fig. 1. The monitoring system 2 shown in Fig. 1 shows a sensor 8 that is mounted on a plate 22 attached to a threaded metal rod 16 (e.g. made of steel). The rod 16 is attached to a concrete floor 4 (foundation member) inside the tower of a wind turbine. The sensor 8 is configured to measure the vertical displacement between the foundation member 4 and the base tower 6 (base member) of the wind turbine. The threaded rod 16 is mechanically secured to the concrete floor 4 and the sensor 8 is mounted on the threaded rod 16.

The sensor 8 is mounted on a plate 22 by means of a flat bolt 26 that is fixed to a threaded pipe member 34 of the sensor 8. The plate 22 is fixed to the threaded metal rod 16 by means of an upper bolt 26' and a lower bolt 26". An upper washer 24' is sandwiched between the upper side of the plate 22 and the upper bolt 26'. Similarly, a lower washer 24" is sandwiched between the lower side of the plate 22 and the lower bolt 26".

The sensor 8 shown in Fig. 1 is an inductive sensor 8 that generates an electric output signal (e.g. 0-10V) depending on the distance between the sensor 8 and the metal base member 6 above the sensor 8. It is, however, possible to apply other types of sensors such as piezo-electric transducers, linear variable differential transformer sensors, capacitive transducers, string potentiometers, Hall-effect sensors, laser sensors or eddy current sensors by way of example.

A cable 28 is connected to the sensor 8 via a plug 30 that is electrically and mechanically connected to the sensor 8. A Cable head 32 is provided in the distal end of the cable 28 and the cable head 32 is configured to be electrically and mechanically connected to the plug 30.

The sensor 8 is detachably mounted to the plate 22 and the sensor 8 may be replaced by unscrewing the bolt 26 and pulling the sensor 8 downwards through the opening in the plate 22, through which opening the 8 has been inserted.

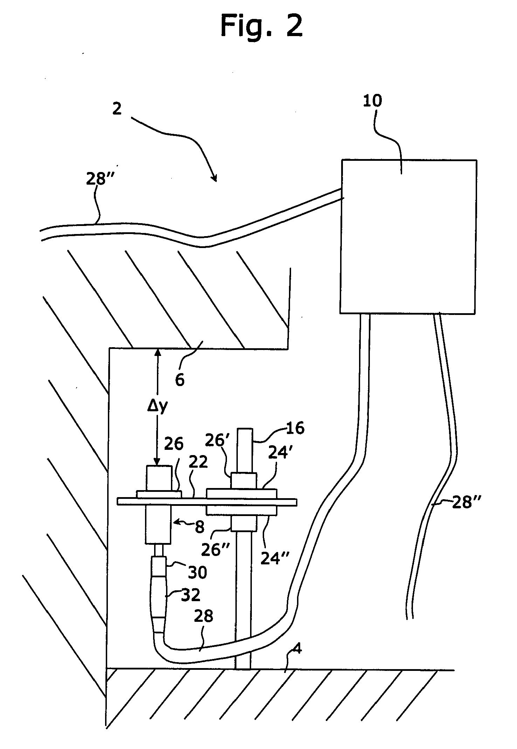

The cable 28 is connected to a control unit (see Fig. 2, Fig. 3 and Fig. 4) configured to receive and send data. The sensor 8 may be configured to send data wirelessly to the control unit instead of using a wired connection like illustrated in Fig. 1.

Fig. 2 illustrates another view of the monitoring system 2 shown in Fig. 1. The monitoring system 2 comprises a control unit 10 that is arranged in a distance from the sensor 8. The sensor 8 is electrically connected to the control unit 10 by a cable 28. It would alternatively be possible connect the sensor 8 wirelessly to the control unit 10.

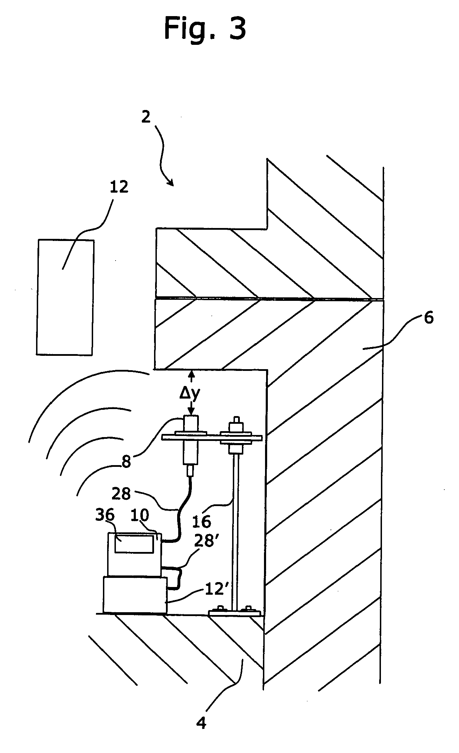

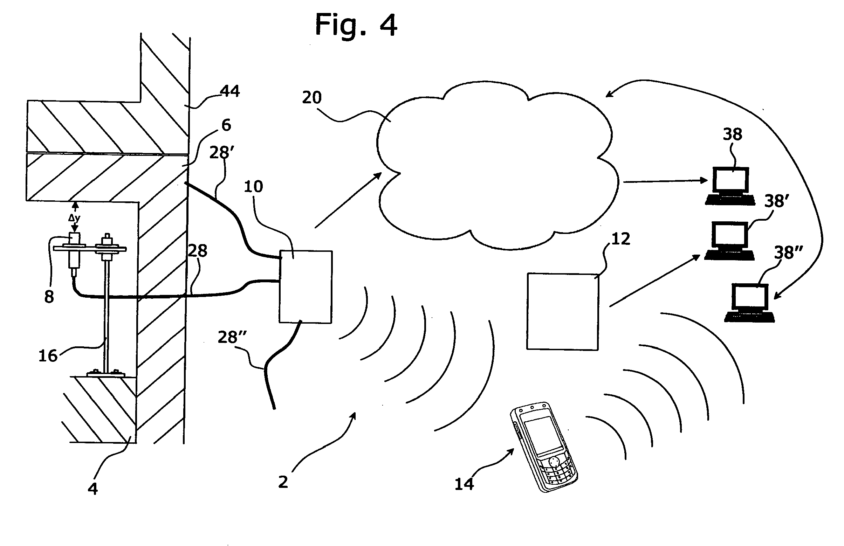

Two additional cables 28', 28" are connected to the control unit 10. These additional cables 28', 28" may be connected to additional sensors (not shown). In the monitoring system according to the invention, three sensors 8 are connected to the control unit 10. The control unit 10 is configured to send received displacement data (from the sensors 8) to an external unit (see Fig. 3 and Fig. 4).

Fig. 3 illustrates a monitoring system 2 according to the invention. The monitoring system 2 comprises the sensor 8 fixed to a rod 16 that is fixed to a concrete floor 4 (foundation member). The sensor 8 is connected to a control unit 10 by a cable 28. The control unit 10 is equipped with a display 36 that may provide several type of information.

The sensor 8 is configured to measure vertical displacement Δy between the foundation member 4 and the base member 6 of a tower (e.g. the tower of a wind turbine). The control unit 10 is connected wirelessly to a first external unit 12 and with a cable 28' to a second external unit 12'. The external units 12, 12' may be a computer, a server, a mobile phone or another electrical device capable of receiving data from the control unit 10. Fig. 4 illustrates a monitoring system 2 that is configured to communicate with several external receivers. The monitoring system 2 is provided inside a tower of wind turbine and comprises the sensor 8 that is attached to a rod 16. The sensor 8 is configured to measure displacement Δy between a floor 4 and a base member 6. Preferably, the sensor 8 is capable of measuring small displacements with high precision.

The monitoring system 2 moreover comprises a control unit 10 that is electrically connected to the sensor 8 by a cable 28. Two other cables 28', 28" are connected to the control unit 10. These cables 28', 28" may be connected to two additional sensors (not shown) capable of measuring displacement between the floor 4 (foundation member) and the base member 6.

The control unit 10 is coupled to the Internet 20 and communicates wirelessly with an external unit 12 and a mobile phone 14. A first computer 38 is connected to the Internet 20. Since the control unit 10 is connected to the Internet 20, the first computer 38 can have excess to the displacement data that are measured by the sensor 8, sent to the control unit 10 and further uploaded to a server via the Internet 20. The displacement data is accessible through the first computer 38 from an Internet page showing the measured displacement data.

The external device 12 is connected to a second computer 38' e.g. via a mobile network or another connection. Thus, displacement data may be accessed through the second computer 38'.

The mobile phone 14 receives an alert generated by the control unit 10. However; since the mobile phone 14 is connected (wirelessly) to a third computer 38" that is connected to the Internet 20, the alert generated by the control unit 10 may be send via the Internet 20 and further to the mobile phone 14.

Alerts generated by the control unit 10 may be distributed to one or more receivers either by a direct connection (e.g. sent from the control unit 10 to the mobile phone 14) or through the Internet (e.g. to an email account) or through an external unit 12 coupled to the Internet 20 or to an external unit (receiver) 12.

The monitoring system 2 makes it possible to measure the vertical displacement between a foundation member 4 and a base member 6 and send these measured data to one or more receivers. Hereby useful information about the foundation member 4 and the base member 6 can be provided. Updated data may be provided online by a monitoring system 2 according to the invention.

The monitoring system 2 according to the invention can thus be used to monitor displacements Δy between a foundation member 4 inside a tower of a wind turbine and a base tower of the wind turbine.

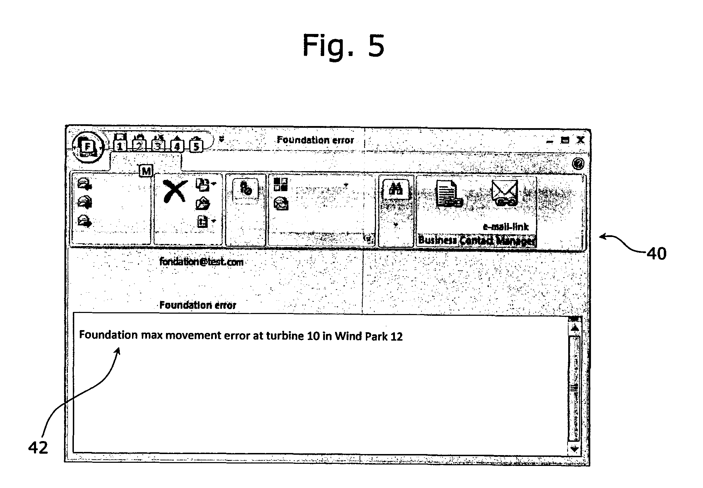

Fig. 5 illustrates an example of a text message in the form of an email 40 that is generated by a control unit 10 and sent to a receiver. The email 40 comprises the following text message 42: "Foundation max movement error at turbine 10 in Wind Park 12" indicating that a foundation error (maximal movement error) has been detected in wind turbine 10 in Wind Park 12.

The control unit 10 of the monitoring system 2 is capable of generating an alert that may be sent to a responsible person by an email 40 like illustrated in Fig. 5. It is also possible to use the control unit 10 to generate and to send a SMS to a mobile phone 14 like illustrated in Fig. 4.

According to the invention the control unit 10 is capable of generating and sending a stop command to a wind turbine when a predefined condition is met (e.g. when a foundation max movement error is detected). In this way the monitoring system is able to prevent damage of a wind turbine in case of extremely windy weather conditions.

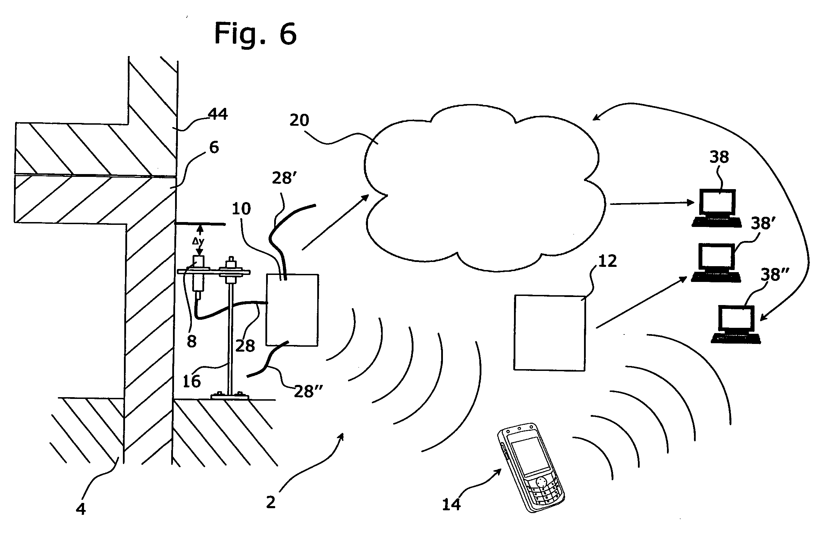

Fig. 6 illustrates an alternative embodiment of a monitoring system 2 according to the invention. The monitoring system 2 comprises the inductive displacement sensor 8 similar to the one shown in Fig. 1-4, however, the sensor 8 is arranged outside of the base member of a tower 44. The sensor 8 is mechanically secured to a threaded rod 16 that is fixed to the foundation member (concrete floor) 4 of the tower 44. The sensor 8 is configured to measure the vertical displacement of a base member 6 of the tower 44 relative to the concrete floor 4. The tower will due to the wind be subject to forces capable of displacing the base member 6 of the tower relative to the concrete floor 4.

The sensor 8 measures the distance Δy between the sensor 8 and the lower side of a horizontally extending plate member 46 that is secured to the base member 6.

The sensor 8 is electrically connected to a control unit 10 by a cable 28. The control unit 10 is further connected to two additional sensors (not shown) by a second cable 28' and a third cable 28".

The control unit 10 is connected to the Internet 20 and configured to communicate wirelessly with an external unit 12 and a mobile phone 14. The control unit 10 is connected to a first computer 38 via the internet connection. The first computer 38 has excess to displacement data that is measured by the sensor 8 via the internet connection.

The external unit 12 is configured to wirelessly communicate with a second computer 38' while the mobile phone 14 is adapted to communicate with a third computer 38".

The monitoring system 2 may preferably be housed in a housing that can protect the sensor 8 and the plate from rain and vandalism.

According to the invention the monitoring system 2 comprises three sensors evenly distributed along the periphery of a base member 6 of a tower 44. The sensors 8 may be arranged inside the base member 6 of the tower 44 or outside the base member 6 of the tower 44.

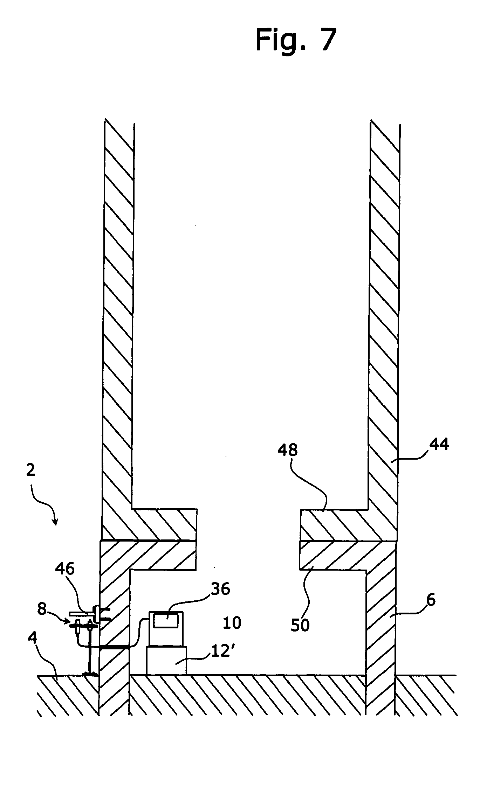

Fig. 7 illustrates a cross-sectional view of a wind turbine tower 44 attached to a foundation member 4. The flange 48 of the tower 44 is mechanically attached to the flange 50 of the base member 6 of the tower 44. The base member 6 is concreted into the floor 4 (the foundation member) of the wind turbine tower 44.

A monitoring system 2 is arranged outside the base member 6 of the tower 44. The monitoring system 2 comprises three sensors 8 (from which only one is shown in Fig. 7). The sensor 8 is an inductive sensor 8 like the one illustrated in Fig. 1-4 and in Fig. 6. The sensor 8 is arranged outside the base member 6 of the tower 44. The sensor 8 is configured to measure vertical displacement between the floor 4 and the base member 6 of the tower 44. A plate member 46 is secured to the base member 6 and the sensor 8 is configured to measure the distance between the head of the sensor 8 and the lower surface of the plate member 46. A cable 28 connects the sensor 8 and a control unit having a display 36. The control unit 10 is arranged on an external unit 12' located under the control device 10. The control device 10 is connected to the external unit 12' wirelessly. The monitoring system 2 may, like indicated in Fig. 4 and Fig. 6 be configured to communicate wirelessly with further external devices e.g. via the Internet.

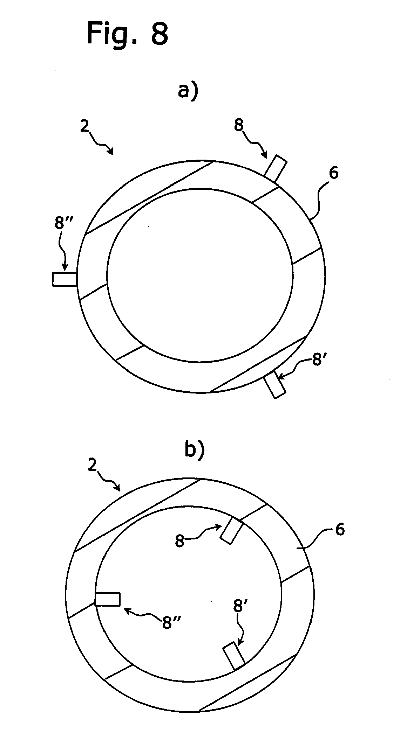

Fig. 8 illustrates a cross-sectional top view of two monitoring systems 2 according to the invention. The monitoring systems 2 are used to measure the vertical displacement between the base member 6 of a wind turbine tower and the foundation member (concrete floor) of the wind turbine tower.

In Fig. 8 a) three sensors 8, 8', 8" are evenly distributed along the outer periphery of the base member 6 of the wind turbine tower. This means that the angle between adjacent sensors is about 120 degrees. This configuration corresponds to the way the sensor 8 is mounted in Fig. 6 and in Fig. 7.

In Fig. 8 b) three sensors 8, 8', 8" are evenly distributed along the inner periphery of the base member 6 of the wind turbine tower. This corresponds to the configuration illustrated in Fig. 1-4.

The monitoring system 2 illustrated in the figures may be used to measure vertical displacement between a base member 6 and a foundation member 4 in other types of tower 44. The monitoring system 2 may apply various types of sensors.

### List of reference numerals

- 2: - Monitoring system
- 4: - Foundation member
- 6: - Base member
- 8, 8', 8": - Sensor
- 10: - Control unit
- 12, 12': - External unit
- 14: - Mobile phone
- 16: - Rod
- 18: - Storage means
- 20: - Internet
- 22: - Plate
- 24', 24": - Washer
- 26, 26', 26": - Bolt
- 28, 28', 28": - Cable
- 30: - Plug
- 32: - Cable head
- 34: - Threaded pipe member
- 36: - Display
- Δy: - Vertical displacement
- 38, 38', 38": - Computer
- 40: - Email
- 42: - Text message
- 44: - Tower
- 46: - Plate member
- 48, 50: - Flange

## Claims

1. A monitoring system (2) for monitoring a wind turbine during operation thereof, said monitoring system being configured to monitor a vertical displacement (Δy) between a foundation member (4) of said wind turbine and a base member (6) attached to the foundation member (4), wherein the monitoring system (2) comprises:
- three sensors (8) adapted to measure displacement
(Δy) between the foundation member (4) and the base member (6) configured to measure said vertical displacement (Δy) between the foundation member (4) and the base member (6) of a tower, wherein each of the three sensors (8) are arranged on a vertically extending rod (16) fixed to the foundation member (4)
- a control unit (10) configured to receive displacement data from the sensors (8) and to send the received displacement data to an external unit (12, 14); the monitoring system further comprising means for sending a stop command to said wind turbine when a predefined displacement between the foundation member and the base member being exceeded.

2. A monitoring system (2) according to claim 1 **characterised in that** the control unit (10) comprises storage means (18) configured to store received displacement data and that the control unit (10) is configured to generate an alert when a predefined alert criterion is meet.

3. A monitoring system (2) according to claim 2 **characterised in that** the predefined alert criterion is a predefined maximal allowable displacement in one or more directions.

4. A monitoring system (2) according to one of the preceding claims **characterised In that** a message is sent to a receiver through a network.

5. A monitoring system (2) according to one of the preceding claims **characterized in that** the control unit (10) is configured to be reached remotely through an IP-connection via VPN-tunnelling or direct from an Internal network.

6. A method of monitoring a vertical displacement (Δγ) between a foundation member (4) and a base member (6) attached to the foundation member (4) of a wind turbine during operation thereof, wherein the displacements (Δy) monitoring is carried out by using three sensors (8), each being arranged on a vertically extending rod (16) fixed to the foundation member (4), and wherein displacement data from the sensor(s) (8) are forwarded to an external unit (12, 14); **characterized In that** a stop command is being send to said wind turbine when a predefined displacement between the foundation member and the base member being exceeded.

7. A method according to claim 6 **characterised in that** displacement data is sent to a control unit and that the control unit (10) forwards the displacement data to an external access point.

8. A method according to claim 5 or claim 7 **characterised in that** an alert is sent to a computer or a mobile phone when the displacement exceeds a predefined level.

9. A wind turbine comprising a monitoring system (2) according to one of the claims 1-5.

10. Use of a monitoring system according to any of the claims 1 - 5 for monitoring a vertical displacement (Δγ) between a foundation member (4) and a base member (6) attached to the foundation member (4) of a wind turbine.

## Patentansprüche

1. Überwachungssystem (2) zum Überwachen einer Windturbine während des Betriebs dieser, wobei das Überwachungssystem ausgebildet ist zum Überwachen einer vertikalen Verschiebung (Δy) zwischen einem Trägerelement (4) der Windturbine und einem an dem Trägerelement (4) befestigten Basiselement (6), wobei das Überwachungssystem (2) umfasst:
- drei Sensoren (8) geeignet zum Messen der Verschiebung (Δy) zwischen dem Trägerelement (4) und dem Basiselement (6) ausgebildet zum Messen der vertikalen Verschiebung (Δy) zwischen dem Trägerelement (4) und dem Basiselement (6) eines Turmes, wobei jeder der drei Sensoren (8) an einer sich vertikal erstreckenden Stange (16), die an dem Trägerelement (4) befestigt ist, angeordnet sind
- eine Steuereinheit (10) ausgebildet zum Empfangen von Verschiebungsdaten von den Sensoren (8) und zum Senden der empfangenen Verschiebungsdaten zu einer externen Einheit (12, 14), wobei das das Überwachungssystem (2) weiterhin umfasst:
- Mittel zum Senden eines Stopp-Befehls zu der Windturbine, wenn eine vorbestimmte Verschiebung zwischen dem Trägerelement und dem Basiselement überschritten wird.

2. Überwachungssystem (2) nach Anspruch 1, **dadurch gekennzeichnet, dass** die Steuereinheit (10) Speichermittel (18) umfasst, die zum Speichern der empfangenen Verschiebungsdaten ausgebildet sind, und dass die Steuereinheit (10) zum Erzeugen einer Warnmeldung, wenn ein vorbestimmtes Warnkriterium erfüllt ist, ausgebildet ist.

3. Überwachungssystem (2) nach Anspruch 2, **dadurch gekennzeichnet, dass** das Warnkriterium eine vorbestimmte maximal zugelassene Verschiebung in ein oder mehreren Richtungen ist.

4. Überwachungssystem (2) nach einem der vorhergehenden Ansprüche, **dadurch gekennzeichnet, dass** eine Nachricht über ein Netzwerk zu einem Empfänger gesendet wird.

5. Überwachungssystem (2) nach einem der vorhergehenden Ansprüche, **dadurch gekennzeichnet, dass** die Steuereinheit (10) ausgeführt ist, um über eine IP-Verbindung mittels VPN-Tunneln oder direkt von einem internen Netzwerk aus ferngesteuert erreichbar ist.

6. Verfahren zum Überwachen einer vertikalen Verschiebung (Δy) zwischen einem Trägerelement (4) und einem Basiselement (6), das an dem Trägerelement (4) einer Windturbine befestigt ist, während des Betriebs dieser, wobei die Überwachung der Verschiebung (Δy) ausgeführt wird unter Verwendung von drei Sensoren (8), von denen jeder an einer sich vertikal erstreckenden Stange (16), die an dem Trägerelement befestigt ist, angeordnet ist, und wobei Verschiebungsdaten von den Sensoren (8) zu einer externen Einheit (12, 14) weitergeleitet werden; **dadurch gekennzeichnet, dass** ein Stopp-Befehl zu der Windturbine gesendet wird, wenn eine vorbestimmte Verschiebung zwischen dem Trägerelement und dem Basiselement überschritten wird.

7. Verfahren nach Anspruch 6, **dadurch gekennzeichnet, dass** die Verschiebungsdaten zu einer Steuereinheit (10) gesendet werden und dass die Steuereinheit die Verschiebungsdaten an einen externen Zugriffspunkt weiterleitet.

8. Verfahren nach Anspruch 6 oder 7, **dadurch gekennzeichnet, dass** eine Warnmeldung zu einem Computer oder einem Mobiltelefon gesendet wird, wenn die Verschiebung ein vorbestimmtes Niveau überschreitet.

9. Windturbine, umfassend ein Überwachungssystem (2) nach einem der Ansprüche 1-5.

10. Verwendung eines Überwachungssystems nach einem der Ansprüche 1-5 zum Überwachen einer vertikalen Verschiebung (Δy) zwischen einem Trägerelement (4) der Windturbine und einem an dem Trägerelement (4) einer Windturbine befestigten Basiselement (6).

## Revendications

1. Système de surveillance (2) pour surveiller une éolienne au cours de son fonctionnement, ledit système de surveillance étant configuré pour surveiller un déplacement vertical (Δγ) entre un élément de fondation (4) de ladite éolienne et un élément de base (6) fixé à l'élément de fondation (4), dans lequel le système de surveillance (2) comprend :
- trois capteurs (8) qui sont à même de mesurer le déplacement (Δγ) entre l'élément de fondation (4) et l'élément de base (6) configurés pour mesurer ledit déplacement vertical (Δγ) entre l'élément de fondation (4) et l'élément de base (6) d'une tour, dans lequel chacun des trois capteurs (8) est aménagé sur une tige (16) s'étendant verticalement et qui est fixée à l'élément de fondation (4) ;
- une unité de commande (10) configurée pour recevoir des données de déplacement des capteurs (8) et envoyer les données de déplacement reçues à une unité externe (12, 14) ; le système de surveillance comprenant en outre des moyens pour envoyer une instruction d'arrêt à ladite éolienne lorsqu'un déplacement prédéfini entre l'élément de fondation et l'élément de base est dépassé.

2. Système de surveillance (2) selon la revendication 1, **caractérisé en ce que** l'unité de commande (10) comprend des moyens de stockage (18) configurés pour stocker des données de déplacement reçues et l'unité de commande (10) est configurée pour générer une alerte lorsqu'un critère d'alerte prédéfini est rencontré.

3. Système de surveillance (2) selon la revendication 2, **caractérisé en ce que** le critère d'alerte prédéfini est un déplacement maximal autorisé prédéfini dans une ou plus de directions.

4. Système de surveillance (2) selon l'une quelconque des revendications précédentes, **caractérisé en ce qu'**un message est envoyé à un récepteur via un réseau.

5. Système de surveillance (2) selon l'une quelconque des revendications précédentes, **caractérisé en ce que** l'unité de commande (10) est configurée pour être atteinte à distance par une connexion IP via la création d'une passerelle par un réseau privé virtuel VPN ou directement à partir d'un réseau interne.

6. Procédé de surveillance d'un déplacement vertical (Δγ) entre un élément de fondation (4) et un élément de base (6) fixé à l'élément de fondation (4) d'une éolienne au cours de son fonctionnement, dans lequel la surveillance du déplacement (Δγ) est effectuée en utilisant trois capteurs (8), chacun étant aménagé sur une tige (16) s'étendant verticalement et fixée à l'élément de fondation (4), et dans lequel des données de déplacement provenant du ou des capteurs (8) sont acheminées à une unité externe (12, 14) ; **caractérisé en ce qu'**une instruction d'arrêt est envoyée à ladite éolienne lorsque le déplacement prédéfini entre l'élément de fondation et l'élément de base est dépassé.

7. Procédé selon la revendication 6, **caractérisé en ce que** des données de déplacement sont envoyées à une unité de commande et l'unité de commande (10) achemine les données de déplacement à un point d'accès externe.

8. Procédé selon la revendication 6 ou la revendication 7, **caractérisé en ce qu'**une alerte est envoyée à un ordinateur ou à un téléphone mobile lorsque le déplacement dépasse un niveau prédéfini.

9. Eolienne comprenant un système de surveillance (2) selon l'une quelconque des revendications 1 à 5.

10. Utilisation d'un système de surveillance selon l'une quelconque des revendications 1 à 5 pour surveiller un déplacement vertical (Δγ) entre un élément de fondation (4) et un élément de base (6) fixé à l'élément de fondation (4) d'une éolienne.
